# FASCICULE DE BREVET EUROPEEN

(11) **EP 2 217 974 B1**
(45) Date de publication et mention de la délivrance du brevet: **12.12.2018**
(21) Numéro de dépôt: 08852054.9
(22) Date de dépôt: 18.11.2008
(51) Int. Cl.: G05B 19/042, G05B 19/05

(54) **MODULE D'ENTRÉES/SORTIES INTÉGRANT UNE FONCTION LOGIQUE POUR CONTRÔLER LES DONNÉES**
EINGABE-/AUSGABE-MODUL MIT EINER LOGIKFUNKTION ZUR DATENSTEUERUNG
INPUT/OUTPUT MODULE INTEGRATING A LOGIC FUNCTION FOR DATA CONTROL

(30) Priorité: 22.11.2007 FR 0759212
(43) Date de publication de la demande: 18.08.2010
(73) Titulaire: Schneider Electric Industries SAS, 92500 Rueil-Malmaison (FR)
(72) Inventeur: GROSJEAN, Dominique, F-06650 Le Rouret (FR)
(74) Mandataire: Dufresne, Thierry
(86) Numéro de dépôt international: PCT/EP2008/065773
(87) Numéro de publication internationale: WO 2009/065838

(56) Documents cités:
- EP-A- 1 857 936
- US-A1- 2004 078 715
- ANDERSON K: "IMPLEMENTATION COST/BENEFITS FOR FAULT TOLERANT SYSTEMS" ISA TRANSACTIONS, INSTRUMENT SOCIETY OF AMERICA. PITTSBURGH, US, vol. 30, no. 4, 1 janvier 1991 (1991-01-01), pages 107-116, XP000275598 ISSN: 0019-0578
- GUDEA D D ET AL: "Fault tolerant power controller (for space power applications)" 19890806; 19890806 - 19890811, 6 août 1989 (1989-08-06), pages 231-237, XP010089680

## Description

La présente invention se rapporte à un module d'entrées/sorties intégrant une fonction logique afin de pouvoir contrôler les données à envoyer vers un équipement d'automatisme.

Un automate programmable ou PLC ("Programmable Logical Controller") est un équipement d'automatisme capable de piloter, commander et/ou surveiller un ou plusieurs process, notamment dans le domaine des automatismes industriels, du bâtiment ou de la distribution électrique.

De construction généralement modulaire, un automate programmable PLC est composé de différents modules qui communiquent entre eux par un bus de transmission, appelé généralement bus "fond de panier" (appelé aussi bus "backplane"). Les modules sont fixés mécaniquement dans un rack, lequel comprend un circuit imprimé qui supporte également le bus fond de panier ainsi que les éléments de connexion destinés à coopérer avec des connecteurs présents généralement sur la partie arrière des modules de manière à réaliser la liaison nécessaire entre les modules et le bus. Le nombre de modules dépend bien entendu de la taille et du type de process à automatiser.

Typiquement, un automate programmable peut comporter plusieurs équipements tels que :
- un module d'alimentation fournissant les différentes tensions aux autres modules à travers le bus fond de panier,
- un module unité centrale UC qui comporte un logiciel embarqué ("firmware") intégrant un système d'exploitation OS temps réel, et un programme d'application, ou programme utilisateur, contenant les instructions à exécuter par le logiciel embarqué pour effectuer les opérations d'automatisme souhaitées. Le module UC comporte aussi généralement une connexion en face avant vers des outils de programmation de type ordinateur personnel PC.
- des modules d'entrées/sorties E/S de divers types en fonction du process à commander, tels que E/S numériques ou TOR, analogiques, de comptage, etc. Ces modules E/S sont reliés à des capteurs et des actionneurs participant à la gestion automatisée du process.
- un ou plusieurs modules de communication vers des réseaux de communication (Ethernet, CAN, ...) ou des interfaces homme-machine (écran, clavier,...).

A titre d'exemple, un module d'entrées/sorties peut comporter entre 1 à 64 voies E/S, un automate PLC pouvant être capable suivant les modèles de gérer plusieurs centaines de voies E/S. En cas de besoin, plusieurs racks sont donc connectés entre eux dans un même PLC.

Ainsi, en fonction de l'application et du process à automatiser, un automate PLC peut comporter un grand nombre de modules. C'est l'utilisateur de l'automate PLC qui décide donc du nombre et du positionnement des modules dans un rack, en fonction de son application.

Dans des applications de sécurité, chaque modules d'entrées/sorties de l'automate programmable doit répondre à certains critères de sécurité. Par exemple, les données envoyées par un module d'entrées/sorties sur le bus de communication doivent être sûres. Actuellement les données à envoyer sur le bus sont écrites dans une mémoire volatile de type DPRAM ("Dual Port Random Access Memory") accédé d'une part en lecture/écriture par un microcontrôleur et d'autre part par un composant de communication connecté au bus fond de panier. Une telle structure ne permet pas de contrôler l'intégrité des données écrites dans la mémoire volatile. Un tel module ne peut donc être employé pour des applications de sécurité.

Il est connu du document EP1857936 une méthode permettant de comparer des données issues d'un même procédé exécuté en parallèle dans deux dispositifs indépendants. Dans ce type de méthode, la comparaison effectuée ne permet pas de détecter une défaillance dans l'un des dispositifs utilisés. En effet, si le comparateur est défaillant, l'un des canaux peut produire des données fausses sans que cela soit détecté par le comparateur.

Le but de l'invention est de proposer un module d'entrées/sorties présentant une structure permettant un meilleur contrôle des données à envoyer sur le bus fond de panier afin notamment de pouvoir être employé dans des applications de sécurité.

Ce but est atteint par un module d'entrées/sorties communiquant avec un équipement d'automatisme, caractérisé en ce qu'il comprend :
- deux canaux d'entrée de données, chaque canal d'entrée comportant une mémoire volatile apte à contenir des données et un microcontrôleur pour lire/écrire dans la mémoire volatile des données représentatives des entrées/sorties du module,
- un canal de sortie des données, dans lequel est mis en oeuvre une fonction logique de type ET ou OU destinée à combiner les données stockées en parallèle dans les deux mémoires volatiles pour les envoyer à l'équipement d'automatisme.

Le module de l'invention n'effectue aucun contrôle sur les données car il ne fait que combiner les données issues des deux canaux. Le contrôle des données est effectué ultérieurement et permet ainsi de détecter un défaut de fonctionnement dans les composants utilisés dans les différents canaux du module.

Selon une particularité de l'invention, les mémoires volatiles sont à double accès en lecture/écriture.

Selon une autre particularité, les deux microcontrôleurs de chaque canal d'entrée sont connectés entre eux de manière à s'accorder sur les données écrites dans les deux mémoires volatiles.

Selon une autre particularité, le module d'entrées/sorties est connecté sur un bus fond de panier auquel est également connecté l'équipement d'automatisme.

Selon une autre particularité, l'équipement d'automatisme est un autre module d'entrées/sorties, un module unité centrale ou un module de communication.

D'autres caractéristiques et avantages vont apparaître dans la description détaillée qui suit en se référant à un mode de réalisation donné à titre d'exemple et représenté par les dessins annexés sur lesquels :

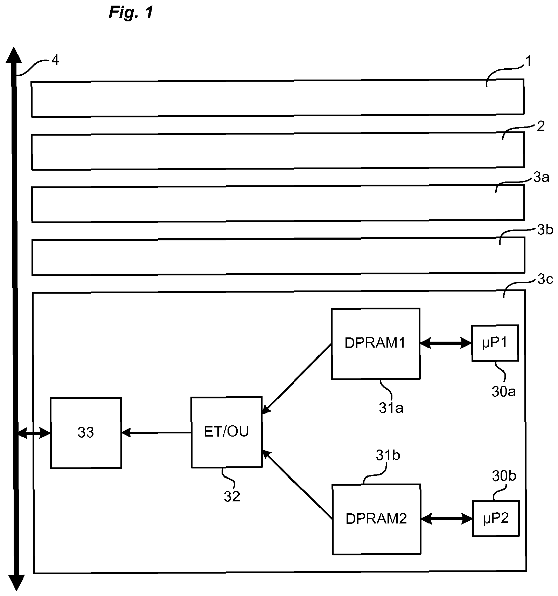

- la figure 1 représente un équipement d'automatisme comportant une pluralité de modules connectés sur un bus fond de panier, l'un des modules étant un module d'entrées/sorties du type de l'invention.

En référence à la figure 1, il est connu qu'un équipement d'automatisme de type automate programmable comporte un module d'alimentation 1, un module unité centrale 2 et plusieurs modules d'entrées/sorties 3a, 3b, 3c (ci-après 3) interconnectés sur un bus fond de panier 4 (appelé également "backplane" en anglais, ou "bus fond de bac"). Des capteurs ou actionneurs (non représentés) sont par exemple connectés sur les modules d'entrées/sorties. Chaque module d'entrées/sorties 3 comporte notamment un contrôleur de bus 33 constitué d'un composant standard de communication permettant d'envoyer les données, sous forme numérique, représentatives des entrées/sorties du module, sur le bus fond de panier 4 à destination d'un autre équipement d'automatisme, tel que par exemple un autre module d'entrées sorties 3, le module unité centrale 2 ou un module de communication.

Selon l'invention, afin de renforcer la sécurité des données envoyées sur le bus fond de panier 4, le module d'entrées/sorties 3 comporte une structure particulière. Cette structure est constituée de deux canaux d'entrée de données et d'un canal de sortie des données. Chaque canal d'entrée comporte un microcontrôleur 30a, 30b et une mémoire volatile 31a, 31b à double accès, par exemple de type DPRAM ("Dual Port Random Access Memory"). Sur chaque canal d'entrée, le microcontrôleur 30a, 30b est apte à lire et écrire des données dans sa mémoire volatile 31a, 31b. Les données écrites par chaque microcontrôleur 30a, 30b dans sa mémoire volatile 31a, 31b comporte trois éléments tels que les données de l'application représentatives des entrées/sorties du module, une date et des données d'identification, ainsi qu'une signature (ou CRC pour Contrôle de Redondance Cyclique) calculée sur les trois éléments par le microcontrôleur.

Selon l'invention, les données à envoyer par le module sur le bus fond de panier 4 sont dupliqués dans chaque mémoire volatile 31a, 31b par leur microcontrôleur 30a, 30b respectif. Lors de l'écriture des données dans chaque mémoire volatile, les deux microcontrôleurs 30a, 30b, connectés entre eux, s'accordent de manière à écrire les mêmes données dans les deux mémoires volatiles 31a, 31b. Les deux microcontrôleurs vérifient notamment que les signatures calculées en parallèle sur les données à écrire sont identiques. Ainsi, a priori, les mêmes données sont censées être écrites dans les deux mémoires volatiles 31a, 31b. Cependant, une erreur d'écriture est toujours envisageable de sorte que certaines données stockées dans les deux mémoires volatiles 31a, 31b ne sont finalement pas identiques entre elles.

Selon l'invention, lorsqu'il lit les données dans les deux mémoires volatiles 31a, 31b pour les envoyer sur le bus fond de panier 4, le contrôleur de bus du canal de sortie des données met en oeuvre une fonction logique 32 de type ET ou OU lui permettant de combiner les données écrites en parallèle dans les deux mémoires volatiles 31a, 31b des deux canaux d'entrée. La fonction logique 32 est mise en oeuvre sur les données lues dans les mémoires volatiles 31a, 31b, et notamment sur les données de la signature.

Selon l'invention, en dupliquant les données dans les deux mémoires volatiles 31a, 31b en parallèle, il est possible de renforcer la sécurité des données envoyées sur le bus fond de panier 4. La fonction logique 32 permet de combiner les données écrites dans les deux mémoires volatiles 31a, 31b pour obtenir une nouvelle trame à envoyer sur le bus fond de panier 4. Les données écrites dans les deux mémoires volatiles 31a, 31b ainsi que cette trame ne sont donc pas vérifiés par le contrôleur de bus 33 ni par la fonction logique 32, cette dernière se contentant uniquement de formuler la trame à partir des données écrites en parallèle dans les deux mémoires volatiles 31a, 31b. La vérification de la trame obtenue est effectuée ultérieurement par l'équipement d'automatisme destinataire de celle-ci. Cet équipement d'automatisme, par exemple un autre module d'entrées/sorties ou le module unité centrale 2, vérifie alors la cohérence entre les données qu'il a reçues et leur signature.

## Revendications

1. Module d'entrées/sorties (3) communiquant avec un équipement d'automatisme, **caractérisé en ce qu'**il comprend :
- deux canaux d'entrée de données, chaque canal d'entrée comportant une mémoire volatile (31a, 31b) apte à contenir des données et un microcontrôleur (30a, 30b) pour lire/écrire dans la mémoire volatile (31a, 31b) des données représentatives des entrées/sorties du module,
- un canal de sortie des données, dans lequel est mis en oeuvre une fonction logique (32) de type ET ou OU destinée à combiner les données stockées en parallèle dans les deux mémoires volatiles (31a, 31b) pour les envoyer à l'équipement d'automatisme.

2. Module selon la revendication 1, **caractérisé en ce que** les mémoires volatiles (31a, 31b) sont à double accès en lecture/écriture.

3. Module selon la revendication 1 ou 2, **caractérisé en ce que** les deux microcontrôleurs (30a, 30b) de chaque canal d'entrée sont connectés entre eux de manière à s'accorder sur les données écrites dans les deux mémoires volatiles (31a, 31b).

4. Module selon l'une des revendications 1 à 3, **caractérisé en ce que** le module d'entrées/sorties (3) est connecté sur un bus fond de panier (4) auquel est également connecté l'équipement d'automatisme.

5. Module selon la revendication 4, **caractérisé en ce que** l'équipement d'automatisme est un autre module d'entrées/sorties, un module unité centrale (2) ou un module de communication.

## Patentansprüche

1. Eingangs/Ausgangs-Modul (3), das mit einem Automatisierungsgerät kommuniziert, **gekennzeichnet durch**:
- zwei Dateneingangskanäle, wobei jeder Eingangskanal einen flüchtigen Speicher (31a, 31b), der Daten enthalten kann, und einen Mikrocontroller (30a, 30b), um in dem flüchtigen Speicher (31a, 31b) Daten, die für die Eingänge/Ausgänge des Moduls repräsentativ sind, zu lesen/zu schreiben, umfasst,
- einen Datenausgangskanal, in dem eine logische Funktion (32) des UND- oder ODER-Typs ausgeführt wird, die dazu bestimmt ist, die in den beiden flüchtigen Speichern (31a, 31b) parallel gespeicherten Daten zu kombinieren, um sie zu dem Automatisierungsgerät zu schicken.

2. Modul nach Anspruch 1, **dadurch gekennzeichnet, dass** die flüchtigen Speicher (31a, 31b) vom Typ mit doppeltem Zugriff beim Lesen/Schreiben sind.

3. Modul nach Anspruch 1 oder 2, **dadurch gekennzeichnet, dass** die beiden Mikrocontroller (30a, 30b) jedes Eingangskanals in der Weise miteinander verbunden sind, dass sie sich über die in die beiden flüchtigen Speicher (31a, 31b) geschriebenen Daten abstimmen.

4. Modul nach einem der Ansprüche 1 bis 3, **dadurch gekennzeichnet, dass** das Eingangs/Ausgangs-Modul (3) an einen Gehäuserückwand-Bus (4) angeschlossen ist, an denen auch das Automatisierungsgerät angeschlossen ist.

5. Modul nach Anspruch 4, **dadurch gekennzeichnet, dass** das Automatisierungsgerät ein weiteres Eingangs/Ausgangs-Modul, ein Zentraleinheitsmodul (2) oder ein Kommunikationsmodul ist.

## Claims

1. Input/output module (3) communicating with an automation control device, **characterized in that** it comprises:
- two data input channels, each input channel comprising a volatile memory (31a, 31b) able to contain data and a microcontroller (30a, 30b) for reading/writing in the volatile memory (31a, 31b) data representative of the inputs/outputs of the module,
- a data output channel, in which is implemented a logic function (32) of AND or OR type, intended to combine the data stored in parallel in the two volatile memories (31a, 31b) so as to despatch them to the automation control device.

2. Module according to Claim 1, **characterized in that** the volatile memories (31a, 31b) are dual read/write-access memories.

3. Module according to Claim 1 or 2, **characterized in that** the two microcontrollers (30a, 30b) of each input channel are connected together in such a way as to agree with one another regarding the data written in the two volatile memories (31a, 31b).

4. Module according to one of Claims 1 to 3, **characterized in that** the input/output module (3) is connected to a back plane bus (4) to which is also connected the automation control device.

5. Module according to Claim 4, **characterized in that** the automation control device is another input/output module, a central unit module (2) or a communication module.
